(19) Europäisches Patentamt
European Patent Office
Office européen des brevets

(11) **EP 3 651 515 A1**

(12) **EUROPEAN PATENT APPLICATION**
published in accordance with Art. 153(4) EPC

(43) Date of publication:
**13.05.2020 Bulletin 2020/20**

(51) Int Cl.:
***H04W 72/04*** (2009.01)

(21) Application number: **18827754.5**

(22) Date of filing: **27.06.2018**

(86) International application number:
**PCT/CN2018/093166**

(87) International publication number:
**WO 2019/007241 (10.01.2019 Gazette 2019/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.07.2017 CN 201710548553**

(71) Applicant: ZTE Corporation
**Shenzhen, Guangdong 518057 (CN)**

(72) Inventors:
• ZHAO, Wei
**Shenzhen**
**Guangdong 518057 (CN)**
• WANG, Hongzhi
**Shenzhen**
**Guangdong 518057 (CN)**

(74) Representative: **Petraz, Gilberto Luigi et al**
**GLP S.r.l.**
**Viale Europa Unita, 171**
**33100 Udine (IT)**

(54) **METHOD FOR ALLOCATING FREQUENCY-DOMAIN BANDWIDTH RESOURCES, TERMINAL, AND COMPUTER-READABLE STORAGE MEDIUM**

(57)    Disclosed is an allocation method for frequency-domain bandwidth resources, including obtaining the total number of bandwidth resources to be allocated according to frequency-domain bandwidth information of preset region (S10); obtaining the number of space division terminals and the number of frequency division terminals in current allocation period respectively, and obtaining history average spectral efficiency (S20); obtaining simulation space division spectral efficiency and simulation frequency division spectral efficiency according to the number of space division terminals, the number of frequency division terminals, and the history average spectral efficiency, and obtaining simulation allocation proportion according to the simulation space division spectral efficiency and the simulation frequency division spectral efficiency (S30); and obtaining allocation scheme according to the total number of bandwidth resources to be allocated, the simulation allocation proportion, and preset allocation rule, and allocating resources according to the allocation scheme (S40). Also disclosed are allocation terminal and computer-readable storage medium.

Fig. 2

## Description

## Field of the Invention

The present disclosure relates to the technical field of wireless communication technology, and in particular, to an allocation method and an allocating terminal for frequency-domain bandwidth resources, and a computer-readable storage medium.

## Background of the Invention

In the technical field of wireless communication technology, with the use of smart antenna and beam forming technology, the eNodeb (Evolved Node B, the name of the base station in LTE) can accurately transmit wireless signals to a specific narrow space region at a certain angle. In this case, terminals (UE, User Equipment) distributed in different space regions can use the same frequency band resources in the frequency domain and receive data simultaneously in their respective spaces without being affected and interfered with each other.

In the course of this wireless communication, a terminal (UE) includes a space division UE and a frequency division UE. Specifically, the space division UE refers to a UE that is distributed in different space regions and simultaneously uses the same frequency band resource for data transmission, and the frequency division UE refers to a UE that separately uses a frequency band resource for data transmission. For both the space division UE and the frequency division UE, the scheduling preference of the space division UE is higher than that of the frequency division UE. In other words, when allocating the frequency-domain bandwidth resources, the frequency-domain bandwidth resources will be preferentially allocated to the space division UE. When such a method of allocating frequency-domain bandwidth resources is used to allocate resources in a user-intensive region, since the data transmission traffic of the space division UE is usually so large that more frequency-domain bandwidth is occupied, the space division UE may occupy all bandwidth resources of the entire region (CELL), leaving no available frequency-domain bandwidth resources for the frequency division UE, which results in abnormal situations such as improper scheduling and service dropout.

## Summary of the Invention

The following is a summary of the subject matter described in detail herein. This summary is not intended to limit the scope of the claims.

To solve the problem that frequency division terminals cannot be allocated to frequency-domain bandwidth resources during the allocation of frequency-domain bandwidth resources, the present disclosure provides an allocation method and an allocating terminal for frequency-domain bandwidth resources, and a computer-

ter-readable storage medium.

The present disclosure provides an allocation method for frequency-domain bandwidth resources, and the allocation method includes:

obtaining a total number of bandwidth resources to be allocated of a preset region according to frequency-domain bandwidth information of the preset region;

obtaining the number of space division terminals and the number of frequency division terminals of the preset region in a current allocation period, respectively, and obtaining a history average spectral efficiency of the preset region;

obtaining a simulation space division spectral efficiency and a simulation frequency division spectral efficiency according to the number of the space division terminals, the number of the frequency division terminals, and the history average spectral efficiency, and obtaining a simulation allocation proportion according to the simulation space division spectral efficiency and the simulation frequency division spectral efficiency; and

obtaining an allocation scheme according to the total number of bandwidth resources to be allocated, the simulation allocation proportion, and a preset allocation rule, and allocating the resources according to the allocation scheme.

The present disclosure further provides an allocation terminal for frequency-domain bandwidth resources, the allocation terminal includes a processor, a memory and an allocation program stored in the memory and executable by the processor, and when the allocation program is executed by the processor, the following steps are implemented:

obtaining a total number of bandwidth resources to be allocated of a preset region according to frequency-domain bandwidth information of the preset region;

obtaining the number of space division terminals and the number of frequency division terminals of the preset region in a current allocation period, respectively, and obtaining a history average spectral efficiency of the preset region;

obtaining a simulation space division spectral efficiency and a simulation frequency division spectral efficiency according to the number of the space division terminals, the number of the frequency division terminals, and the history average spectral efficiency, and obtaining a simulation allocation proportion according to the simulation space division spectral efficiency and the simulation frequency division spectral efficiency; and

obtaining an allocation scheme according to the total number of bandwidth resources to be allocated, the simulation allocation proportion, and a preset allocation rule, and allocating the resources according to the allocation scheme.

The present disclosure further provides a computer-readable storage medium, on which an allocation program is stored, and when the allocation program is executed by a processor, the steps of the above allocation method for frequency-domain bandwidth resources are implemented.

Other aspects will be apparent upon reading and understanding the accompany drawings and detailed description.

## Brief Description of the Drawings

Fig. 1 is a schematic diagram of a hardware structure of the allocation terminal according to an embodiment of the present disclosure;

Fig. 2 is a schematic flowchart of a first embodiment of the allocation method for frequency-domain bandwidth resources;

Fig. 3 is a detailed schematic flowchart of obtaining a simulation space division spectral efficiency and a simulation frequency division spectral efficiency according to the number of the space division terminals, the number of the frequency division terminals, and the history average spectral efficiency, and obtaining a simulation allocation proportion according to the simulation space division spectral efficiency and the simulation frequency division spectral efficiency in Fig. 2; and

Fig. 4 is a detailed schematic flowchart of obtaining an allocation scheme according to the total number of bandwidth resources to be allocated, the simulation allocation proportion, and a preset allocation rule, and allocating the resources according to the allocation scheme in Fig. 2.

## Detailed Description of the Embodiments

The embodiments described herein are merely illustrative of the present disclosure and are not intended to limit the present disclosure.

The main idea of the solution of the embodiment of the present disclosure is obtaining a total number of bandwidth resources to be allocated of a preset region according to frequency-domain bandwidth information of the preset region; obtaining the number of space division terminals and the number of frequency division terminals of the preset region in a current scheduling period, respectively, and obtaining a history average spectral efficiency of the preset region; obtaining the number of simulation space division resource and the number of simulation frequency division resource according to the number of the space division terminals, the number of the frequency division terminals, and the history average spectral efficiency, and obtaining a simulation allocation proportion according to the number of simulation space division resource, the number of simulation frequency division resource and a preset proportion rule; obtaining an allocation scheme according to the total number of bandwidth resources to be allocated, the simulation allocation proportion, and a preset allocation rule, and allocating the resources according to the allocation scheme.

The allocation method for frequency-domain bandwidth resources according to the embodiment of the present disclosure is mainly applied to the allocation terminal for frequency-domain bandwidth resources, and the allocation terminal may be implemented in various manners. The allocation terminal, for example, may include mobile terminals such as mobile phones, tablets, laptops, PDAs, and also may include fixed terminals such as smart TVs and PC terminals.

In the following description, a PC terminal will be described as an allocation terminal, and persons skilled in the art will understand that the configuration of the embodiments of the present disclosure can be applied to other types of terminals in addition to elements particularly for mobile purposes.

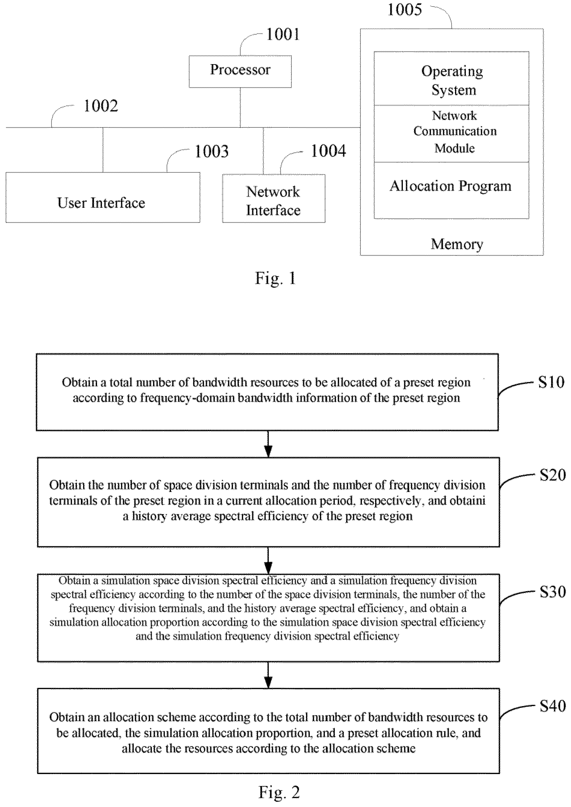

Now refer to Fig. 1, which is a schematic diagram of a hardware structure of the allocation terminal according to the embodiment of the present disclosure. In the embodiment of the present disclosure, the allocation terminal may include a processor 1001 (e.g., CPU), a communication bus 1002, a user interface 1003, a network interface 1004 and a memory 1005. Specifically, the communication bus 1002 is used to implement connection and communication between these components; the user interface 1003 may include a display, an input unit such as a keyboard; the network interface 1004 may include a standard wired interface, a wireless interface (such as WI-FI); and the memory 1005 may be a high speed RAM memory or a non-volatile memory such as a disk memory, and the memory 1005 may also be a storage device independent of the processor 1001 described above.

The allocation terminal may also include a camera, an RF (Radio Frequency) circuit, a sensor, an audio circuit, a Wi-Fi module, and the like. Specifically, the sensor is, for example, a light sensor, a motion sensor and other sensors. The light sensor, for example, may include an ambient light sensor and a proximity sensor. The ambient light sensor may adjust the luminance of the display according to the brightness of the ambient light, and the proximity sensor may turn off the display and/or backlight depending on the distance between the sensitive device and the reference substance. As a kind of motion sensor, the gravity acceleration sensor may detect the magnitude of acceleration in all directions (usually three axes), and detect the magnitude and direction of gravity when at rest. The gravity acceleration sensor may be used to identify applications of allocation terminal postures (such as horizontal and vertical screen switching, related games, and magnetometer posture calibration), and may be used for vibration identification related functions (such as pedometer, tapping), etc. Of course, the allocation terminal may also be configured with other sensors such as a gyroscope, a barometer, a hygrometer, a thermometer, an infrared sensor, and the like, and details are omitted herein.

It will be understood by persons skilled in the art that the hardware structure of the allocation terminal shown in Fig. 1 does not constitute a limitation to the allocation terminal, and may include more or less components than those illustrated, or may be combined with some components, or may include different component arrangement.

Refer to Fig. 1 again. In Fig. 1, the memory 1005, which is a computer-readable storage medium, may include an operating system, a network communication module and an allocation program.

In Fig. 1, the network communication module is mainly used for connection and data communication with a user terminal, and the processor 1001 may call the allocation program stored in the memory 1005 to execute the following operations:

obtaining a total number of bandwidth resources to be allocated of a preset region according to frequency-domain bandwidth information of the preset region;

obtaining the number of space division terminals and the number of frequency division terminals of the preset region in a current allocation period, respectively, and obtaining a history average spectral efficiency of the preset region;

obtaining a simulation space division spectral efficiency and a simulation frequency division spectral efficiency according to the number of the space division terminals, the number of the frequency division terminals, and the history average spectral efficiency, and obtaining a simulation allocation proportion according to the simulation space division spectral efficiency and the simulation frequency division spectral efficiency; and

obtaining an allocation scheme according to the total number of bandwidth resources to be allocated, the simulation allocation proportion, and a preset allocation rule, and allocating the resources according to the allocation scheme.

The history average spectral efficiency includes a history space division average spectral efficiency and a history frequency division spectral efficiency.

The processor 1001 may also call the allocation program stored in the memory 1005 to perform the following operations:

obtaining a simulation space division spectral efficiency according to the number of the space division terminals and the history space division average spectral efficiency, and obtaining a simulation frequency division spectral efficiency according to the number of the frequency division terminals, and the history frequency division average spectral efficiency; and

obtaining a simulation allocation proportion according to the simulation space division spectral efficiency and the simulation frequency division spectral efficiency.

The preset allocation rule may include a preset number of reference frequency division resource.

The processor 1001 may further call the allocation program stored in the memory 1005 to perform the following operations:

obtaining the number of simulation frequency division resource according to the total number of bandwidth resources to be allocated and the simulation allocation proportion;

comparing the number of simulation frequency division resource with the preset number of reference frequency division resource to determine whether the number of simulation frequency division resource is greater than the preset number of reference frequency division resource;

if the number of simulation frequency division resource is greater than the preset number of reference frequency division resource, determining the number of simulation frequency division resource as a real number of frequency division resource, and determining a real number of space division resource according to the real number of frequency division resource and the total number of bandwidth resources to be allocated;

if the number of simulation frequency division resource is less than or equal to the preset number of reference frequency division resource, determining the preset number of reference frequency division resource as the real number of frequency division resource, and determining the real number of space division resource according to the real number of frequency division resource and the total number of bandwidth resources to be allocated; and

allocating the resources according to the real number of frequency division resource and the real number of space division resource.

The processor 1001 may further call the allocation program stored in the memory 1005 to perform the following operations:
obtaining the number of space division terminals and the number of frequency division terminals of the preset region in a current allocation period, respectively, and obtaining an average spectral efficiency of the preset region in a previous allocation period.

Various embodiments of the allocation method for frequency-domain bandwidth resources of the present disclosure are proposed based on the hardware structure of the allocation terminal of the frequency-domain bandwidth resources described above.

The present disclosure provides an allocation method for frequency-domain bandwidth resources.

Now refer to Fig. 2, which is a schematic flowchart of a first embodiment of the allocation method for frequency-domain bandwidth resources.

In the present embodiment, the allocation method for frequency-domain bandwidth resources includes the following steps.

At step S10, obtain a total number of bandwidth resources to be allocated of a preset region according to frequency-domain bandwidth information of the preset region.

In the course of wireless communication, a user terminal (UE) includes a space division terminal and a frequency division terminal. Specifically, the space division terminal refers to a terminal that is distributed in different space regions and simultaneously uses the same frequency band resource for data transmission, and the frequency division terminal refers to a terminal that separately uses a frequency band resource for data transmission. For both the space division terminal and the frequency division terminal, the scheduling preference of the space division terminal is higher than that of the frequency division terminal. In other words, when allocating the frequency-domain bandwidth resources, the frequency-domain bandwidth resources will be preferentially allocated to the space division terminal. When such a method of allocating frequency-domain bandwidth resources is used to allocate resources in a user-intensive region, since the data transmission traffic of the space-division terminal is usually so large that more frequency-domain bandwidth is occupied, the space division terminal may occupy all bandwidth resources of the entire region (CELL), leaving no available frequency-domain bandwidth resources for the frequency division terminal, which results in abnormal situations such as improper scheduling and service dropout.

In view of such a circumstance, the present embodiment provides an allocation method for frequency-domain bandwidth resources to reasonably allocate the frequency-domain bandwidth resources.

In the present embodiment, for example, there is at least one base station in the preset region, and the base station is responsible for data transmission and wireless communication with user terminals in the preset region. The user terminals include the space division terminals and the frequency division terminals (the meanings of the space division terminal and the frequency division terminal are as described above). In order to ensure that both the space division terminals and the frequency division terminals have available frequency band resources, in this embodiment, the frequency-domain bandwidth resource in the preset region is allocated (distributed) by an allocation terminal for frequency-domain bandwidth resources. First, the allocation terminal obtains the frequency-domain bandwidth information of the entire preset region so as to determine an amount of available bandwidth of this preset region. The amount of available bandwidth is a total amount of the bandwidth to be allocated to the space division terminals and the frequency division terminals. When the total amount of the bandwidth is obtained, the total amount of available bandwidth may be converted into the total number of bandwidth resources to be allocated in the preset region according to the relevant provisions of the communication protocol. The unit of the total number of bandwidth resources to be allocated is RB. To be specific, RB is a Resource Block, 1RB=72RE, which is 1 timeslot in the frequency domain (0.5 ms, half a subframe length, and a regular CP corresponding to 7 OFDM symbols) and 12 subcarrierr (180KHz) in the frequency domain. Different bandwidth sizes will correspond to different RB numbers. For example, 20M bandwidth corresponds to 100RB; 15M bandwidth corresponds to 75RB; and 10M bandwidth corresponds to 50RB.

At step 20, obtain the number of space division terminals and the number of frequency division terminals of the preset region in a current allocation period, respectively, and obtain a history average spectral efficiency of the preset region.

In the present embodiment, when the total number of bandwidth resources to be allocated of the preset region is obtained, relevant information of the allocated object will be obtained. As the number of user terminals in the preset region increases or decreases with time, in order to farthest dynamically allocate resources according to the number of terminals, an allocation period may be set. In each allocation period, an allocation scheme is set according to the number of terminals and bandwidth resources in the period to achieve a reasonable allocation of frequency-domain bandwidth resources. Since the user terminals in the preset region include the space division terminals and the frequency division terminals, when obtaining the relevant information of objects, the information includes information of the number of space division terminals and information of the number of frequency division terminals so as to determine the number of space division terminals and the number of frequency division terminals and determine the subsequent scheme based on the number thereof. Of course, when the number of space division terminals and the number of frequency division terminals of the preset region in the current allocation period are obtained, the total number of user terminals of the preset region in the current allocation period is also obtained.

In order to allocate the bandwidth resources more reasonably, in this embodiment, the information of the number of space division terminals and the number of the frequency division terminals in the preset region is obtained, as well as the history average spectral efficiency of the region, such that the bandwidth resources are allocated by synthesizing the transmission rate of the terminals. Specifically, the spectral efficiency may be expressed as a net bit rate (a useful information rate without error correction code), or a maximum throughput divided by the bandwidth of the communication channel or data link. For the history average spectral efficiency, it is based on history communication data of the preset region. In each period, for example, when the base station performs data communication with each user terminal, relevant communication data, which includes the spectral efficiency of each user terminal, may be recorded and stored in a relevant database. The sum of spectral efficiency of each user terminal in the period may be obtained by adding up spectral efficiency of each user terminal in the period. The average spectral efficiency of the period may be obtained by dividing the sum of the spectral efficiencies by the total number of user terminals in the period. Average spectral efficiencies of multiple history periods may be obtained in the above manner. In the present embodiment, in consideration of convenient calculation, the average spectral efficiency of the previous allocation period may be directly used for subsequent calculation. Of course, the subsequent calculation may be performed using average spectral efficiency corresponding to allocation period with the same number of terminals by synthesizing situations of the number of terminals in each allocation period. Further, with the use of relevant statistical formulas (such as mathematical expectations, etc.), the average spectral efficiency of each period is converted to obtain a statistical average spectral efficiency, and the statistical average spectral efficiency may be used for the subsequent calculation.

At step 30, obtaining the number of simulation space division resource and the number of simulation frequency division resource according to the number of the space division terminals, the number of the frequency division terminals, and the history average spectral efficiency, and obtaining a simulation allocation proportion according to the number of simulation space division resource and the number of simulation frequency division resource.

In the present embodiment, when the number of the space division terminals, the number of the frequency division terminals and the history average spectral efficiency are obtained, the situation of resource usage during the current period may be simulated based on these data. For example, a simulation value, which may be called the number of simulation space division resource, may be obtained by the history average spectral efficiency multiplied by the number of the space division terminals so as to simulate the situation of resource usage of the space division terminals in the current period. A simulation value, which may be called the number of simulation frequency division resource, may be obtained by the history average spectral efficiency multiplied by the number of the frequency division terminals so as to simulate the situation of resource usage of the frequency division terminals in the current period. When the number of simulation space division resource and the number of simulation frequency division resource are obtained, a simulation allocation proportion may be obtained based on a magnitude relation thereof. The allocation proportion may represent a usage ratio of the frequency-domain bandwidth resources by the space division terminals and the frequency division terminals. Since the simulation allocation proportion is a scale value based on the history data, information such as the total number of bandwidth resources to be allocated needs to be combined to obtain an allocation scheme.

At step 40, obtain an allocation scheme according to the total number of bandwidth resources to be allocated, the simulation allocation proportion, and a preset allocation rule, and allocate the resources according to the allocation scheme.

In the present embodiment, when the total number of bandwidth resources to be allocated is obtained, a corresponding allocation scheme may be obtained by calculating the preset allocation rule in combination with the total number of bandwidth resources to be allocated obtained at step S10. The simulation allocation proportion, for example, may represent the usage ratio of the frequency-domain bandwidth resources by the space division terminals and the frequency division terminals, and the ratio is a:b. The allocated resource number of the space division terminals in the current allocation period is

$$RB_x = R * \frac{a}{a+b} \, ;$$

in which $RB_S$ is the allocated resource number of the space division terminals and R is the total number of bandwidth resources to be allocated of the preset region in the current period.

When the allocated resource number of the space division terminals is obtained, an allocated resource number of the frequency division terminals may be obtained by the total number of bandwidth resources to be allocated subtracting the allocated resource number of the space division terminals. Thus, an allocation scheme of the frequency-domain bandwidth resources in the current period is obtained so as to allocate the frequency-domain bandwidth resources based on the allocation scheme.

In the present embodiment, a total number of bandwidth resources to be allocated of a preset region is obtained according to frequency-domain bandwidth information of the preset region; the number of space division terminals and the number of frequency division terminals of the preset region in a current allocation period are obtained, respectively, and a history average spectral efficiency of the preset region is obtained; a simulation space division spectral efficiency and a simulation frequency division spectral efficiency are obtained according to the number of the space division terminals, the number of the frequency division terminals, and the history average spectral efficiency, and a simulation allocation proportion is obtained according to the simulation space division spectral efficiency and the simulation frequency division spectral efficiency; and an allocation scheme is obtained according to the total number of bandwidth resources to be allocated, the simulation allocation proportion, and a preset allocation rule, and the resources are allocated according to the allocation scheme. With the aid of the above manner, the present embodiment simulates the situation of bandwidth usage of the space division terminals and the frequency division terminals in the current period with the number of the space division terminals, the number of the frequency division terminals and the history spectral efficiency of the region, and determines the allocation scheme for bandwidth resources according to the simulation results and actual resource number to be allocated so as to allocate proper frequency-domain bandwidth resources to the space division terminals and the frequency division terminals, solve the problem of allocating the frequency-domain bandwidth resources to the space division terminals and the frequency division terminals in the user-intensive region and ensure that the frequency bands are available for both the space division terminals and the frequency division terminals.

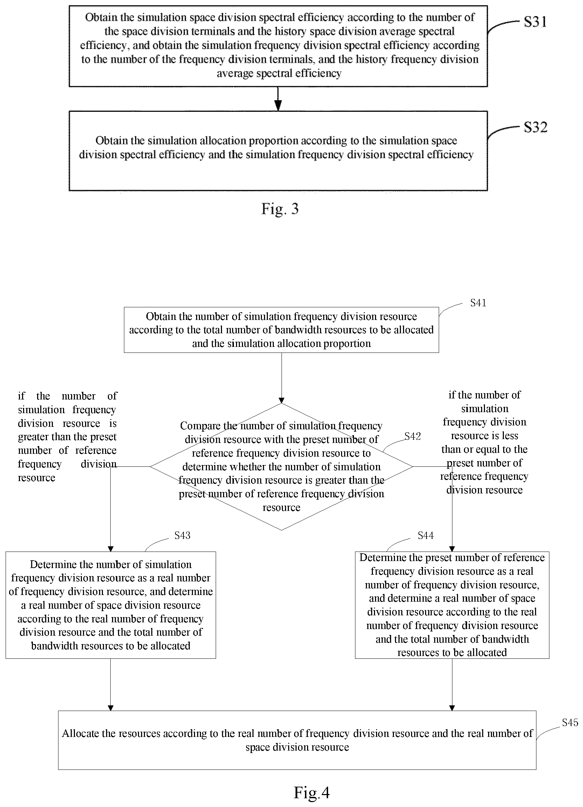

Now refer to Fig. 3, which is a detailed schematic flowchart of obtaining a simulation space division spectral efficiency and a simulation frequency division spectral efficiency according to the number of the space division terminals, the number of the frequency division terminals, and the history average spectral efficiency, and obtaining a simulation allocation proportion according to the simulation space division spectral efficiency and the simulation frequency division spectral efficiency in Fig. 2.

On the basis of the embodiment shown in Fig. 2, the history average spectral efficiency includes a history space division average spectral efficiency and a history frequency division spectral efficiency, and step S30 includes:

obtaining the simulation space division spectral efficiency according to the number of the space division terminals and the history space division average spectral efficiency, and obtaining the simulation frequency division spectral efficiency according to the number of the frequency division terminals, and the history frequency division average spectral efficiency (step S31); and

obtaining the simulation allocation proportion according to the simulation space division spectral efficiency and the simulation frequency division spectral efficiency (step S32).

In the present embodiment, since the data transmission traffic of the space division terminals is usually larger than that of the frequency division terminals, the history average spectral efficiency may include a history space division average spectral efficiency and a history frequency division spectral efficiency so as to more accurately represent the transfer properties of both. Specifically, with regard to the space division average spectral efficiency of each period, it is obtained by adding up spectral efficiencies of the space division terminals in the period to get the sum of space division spectral efficiencies of the space division terminals in the period, and then dividing the sum of space division spectral efficiencies by the total number of the space division terminals in the period. The frequency division average spectral efficiency of the period may be obtained similarly. In the present embodiment, in consideration of convenient calculation, the space division average spectral efficiency and the frequency division average spectral efficiency of the previous allocation period may be directly used for subsequent calculation. Of course, the subsequent calculation may be performed using average spectral efficiency corresponding to allocation period with the same number of terminals by synthesizing situations of the number of terminals in each allocation period. Further, with the use of relevant statistical formulas (such as mathematical expectations, etc.), the average spectral efficiency of each period is converted to obtain a statistical average spectral efficiency, and the statistical average spectral efficiency may be used for the subsequent calculation. In the present embodiment, a simulation value, which may be called the number of simulation space division resource, may be obtained by the history space division average spectral efficiency multiplied by the number of the space division terminals so as to simulate the situation of resource usage of the space division terminals in the current period. A simulation value, which may be called the number of simulation frequency division resource, may be obtained by the history frequency division average spectral efficiency multiplied by the number of the frequency division terminals so as to simulate the situation of resource usage of the frequency division terminals in the current period. The simulation allocation proportion may be represented as follows based on the above description:

$$a : b = N_s * SE_s : N_f * SE_f.$$

In the above formula, a:b is the usage ratio of the frequency-domain bandwidth resources by the space division terminals and the frequency division terminals; $N_s$ is the number of the space division terminals of the preset region in the current period; $SE_s$ is the history space division average spectral efficiency; $N_f$ is the number of the frequency division terminals of the preset region in the current period; and $SE_f$ is the history frequency division average spectral efficiency.

When the number of simulation space division resource and the number of simulation frequency division resource are obtained, a simulation allocation proportion may be obtained based on a magnitude relation thereof. The allocation proportion may represent the usage ratio of the frequency-domain bandwidth resources by the space division terminals and the frequency division terminals. Since the simulation allocation proportion is a scale value based on the history data, information such as the total number of bandwidth resources to be allocated needs to be combined to obtain an allocation scheme.

In the present embodiment, various history average spectral efficiencies are used for calculation according to different types of user terminals so as to obtain a more realistic allocation scheme of the terminals and ensure that both the space division terminals and the frequency division terminals have available frequency band resources.

Now refer to Fig. 4, which is a detailed schematic flowchart of obtaining an allocation scheme according to the total number of bandwidth resources to be allocated, the simulation allocation proportion, and a preset allocation rule, and allocating the resources according to the allocation scheme in Fig. 2.

On the basis of the embodiment shown in Fig. 2, the preset allocation rule includes a preset number of reference frequency division resource, and step 40 includes:

obtaining the number of simulation frequency division resource according to the total number of bandwidth resources to be allocated and the simulation allocation proportion (step S41);

comparing the number of simulation frequency division resource with the preset number of reference frequency division resource to determine whether the number of simulation frequency division resource is greater than the preset number of reference frequency division resource (step S42);

if the number of simulation frequency division resource is greater than the preset number of reference frequency division resource, determining the number of simulation frequency division resource as a real number of frequency division resource, and determining a real number of space division resource according to the real number of frequency division resource and the total number of bandwidth resources to be allocated (step S43);

if the number of simulation frequency division resource is less than or equal to the preset number of reference frequency division resource, determining the preset number of reference frequency division resource as the real number of frequency division resource, and determining the real number of space division resource according to the real number of frequency division resource and the total number of bandwidth resources to be allocated (step S44); and

allocating the resources according to the real number of frequency division resource and the real number of space division resource (step S45).

In the present embodiment, since the scheduling preference of the frequency-domain bandwidth resources of the space division terminal is higher than that of the frequency division terminal, in other words, when allocating the frequency-domain bandwidth resources, the frequency-domain bandwidth resources will be preferentially allocated to the space division UE, it is often that the frequency division terminals have no frequency-domain bandwidth resources available in the case where there is no available frequency-domain bandwidth resource for terminals. In view of such a circumstance, a preset number of reference frequency division resource, which represents the lowest standard of an allocated resource number of the frequency division terminals, may be preset. When calculating the allocated resource number of the frequency division terminals according to the total number of bandwidth resources to be allocated and the simulation allocation proportion, firstly, compare the allocated resource number of the frequency division terminals with the preset number of reference frequency division resource, and if the calculated number of simulation frequency division resource is greater than the preset number of reference frequency division resource, the number of simulation frequency division resource is determined as the real number of frequency division resource and a corresponding real number of space division resource is determined according to the real number of frequency division resource and the total number of bandwidth resources to be allocated to allocate the resources; and if the calculated number of simulation frequency division resource is less than or equal to the preset number of reference frequency division resource, the number of reference frequency division resource is determined as the real number of frequency division resource and the corresponding real number of space division resource is determined to allocate the resource.

Based on the above description, when the simulation allocation proportion of the space division terminals and the frequency division terminals is a:b, the real allocated resource number of the frequency division terminals in the current allocation period may be represented as:

$$RB_f = Max\left[x, \quad R*\frac{b}{a+b}\right].$$

In the above formula, $RB_f$ is the real allocated resource number of the frequency division terminals (i.e., the above real number of frequency division resource); x is the preset number of reference frequency division resource; and R is the total number of bandwidth resources to be allocated of the preset region of the current period. When the real number of frequency division resource is determined according to this formula, the corresponding real number of space division resource may be determined so as to allocate the resources.

In the present embodiment, when the calculated number of simulation frequency division resource is less than or equal to the preset number of reference frequency division resource, the preset number of reference frequency division resource is directly determined as the real number of frequency division resource. However, in the process of implementation, the calculated number of simulation frequency division resource may be further processed (e.g., multiplied by an coefficient which is greater than 1) to obtain the number of simulation frequency division resource greater than the preset number of reference frequency division resource, and when the processed number of simulation frequency division resource is used as the real number of frequency division resource, the corresponding real number of space division resource is determined to allocate the resources.

In addition, the present disclosure further provides a computer-readable storage medium.

In the present disclosure, the computer-readable storage medium has an allocation program stored thereon, and when the allocation program is executed by the processor, the steps of the above allocation method are implemented

It should be noted that for the method implemented by executing the allocation program, reference may be made to various embodiments of the allocation method for frequency-domain bandwidth resources of the present embodiment, which will be omitted herein.

Persons skilled in the art will appreciate that all or some of the steps in the method and functional modules/units in the system and device disclosed above may be implemented as software, firmware, hardware, and suitable combinations thereof. In a hardware implementation, the division between functional modules/units mentioned in the above description does not necessarily correspond to the division of physical components. For example, one physical component may have multiple functions, or one single function or step may be performed cooperatively by several physical components.

Some or all of the components may be implemented as software executed by a processor, such as a digital signal processor or microprocessor, or as hardware, or as an integrated circuit, such as an application specific integrated circuit. Such software may be distributed on a computer readable medium, which may include a computer storage medium (or non-transitory medium) and a communication medium (or transitory medium). As is well known to persons skilled in the art, the term "computer storage medium" includes volatile and nonvolatile, removable and non-removable medium implemented in any method or technology for storing information (such as computer readable instructions, data structures, program modules or other data). The computer storage medium includes, but is not limited to, RAM, ROM, EEPROM, flash memory or other memory technology, CD-ROM, digital versatile disk (DVD) or other optical disk storage, magnetic cassette, magnetic tape, magnetic disk storage, or other magnetic storage device, or any other medium that may be used to store the desired information and may be accessed by the computer. In addition, as is well known to persons skilled in the art, the communication medium typically includes computer readable instructions, data structures, program modules or other data in a modulated data signal such as a carrier wave or other transmission mechanism, and may include any information delivery medium.

The term "including," "containing," or any other variants thereof is intended to cover a non-exclusive inclusion, such that a process, method, article, or system that includes a series of elements includes not only those elements but also other elements that are not listed explicitly, or elements inherent in the process, method, article or system. When there is no further limitation, an element defined by the phrase "including a ..." does not exclude the presence of additional equivalent elements in the process, method, article, or system that includes the element.

The serial numbers of the embodiments of the present disclosure are merely illustrative, and do not represent the advantages and disadvantages of the embodiments.

Through the description of the above embodiments, persons skilled in the art can clearly understand that the methods of the foregoing embodiments may be implemented by means of software in combination with a necessary general hardware platform, or of course by means of hardware. However, in many cases the former is the usual implementation. Based on such understanding, the solution of the present disclosure can be embodied in the form of a software product. The computer software product is stored in a storage medium (such as a ROM/RAM, a magnetic disk, an optical disk) as described above, and includes a plurality of instructions for causing a terminal device (which may be a mobile phone, a computer, a server, an air conditioner, or a network equipment, etc.) to perform the method described in various embodiments of the present disclosure.

The above is only an exemplary embodiment of the present disclosure, and does not thus limit the scope of the claims of the present disclosure. The equivalent structure or equivalent process modified by using the description and accompanying drawings of the present disclosure, or directly or indirectly applied to other related technical fields, is included in the scope of the claims of the present disclosure.

**Claims**

1. An allocation method for frequency-domain bandwidth resources, comprising the following steps:

   obtaining a total number of bandwidth resources to be allocated of a preset region according to frequency-domain bandwidth information of the preset region (S10);
   obtaining the number of space division terminals and the number of frequency division terminals of the preset region in a current allocation period, respectively, and obtaining a history average spectral efficiency of the preset region (S20);
   obtaining a simulation space division spectral efficiency and a simulation frequency division spectral efficiency according to the number of the space division terminals, the number of the frequency division terminals, and the history average spectral efficiency, and obtaining a simulation allocation proportion according to the simulation space division spectral efficiency and the simulation frequency division spectral efficiency (S30); and
   obtaining an allocation scheme according to the total number of bandwidth resources to be allocated, the simulation allocation proportion and a preset allocation rule, and allocating the resources according to the allocation scheme (S40).

2. The allocation method according to claim 1, wherein the history average spectral efficiency comprises a history space division average spectral efficiency and a history frequency division spectral efficiency, and
   the step (S30) of obtaining the simulation space division spectral efficiency and the simulation frequency division spectral efficiency according to the number of the space division terminals, the number of the frequency division terminals, and the history average spectral efficiency, and obtaining the simulation allocation proportion according to the simulation space division spectral efficiency and the simulation frequency division spectral efficiency comprises:

   obtaining the simulation space division spectral efficiency according to the number of the space division terminals and the history space division average spectral efficiency, and obtaining the simulation frequency division spectral efficiency according to the number of the frequency division terminals, and the history frequency division average spectral efficiency (S31); and obtaining the simulation allocation proportion according to the simulation space division spectral efficiency and the simulation frequency division spectral efficiency (S32).

3. The allocation method according to claim 1, wherein the preset allocation rule comprises a preset number of reference frequency division resource, and
   the step (S40) of obtaining the allocation scheme according to the total number of bandwidth resources to be allocated, the simulation allocation proportion, and the preset allocation rule, and allocating the resources according to the allocation scheme comprises:

   obtaining the number of simulation frequency division resource according to the total number of bandwidth resources to be allocated and the simulation allocation proportion (S41);
   comparing the number of simulation frequency division resource with the preset number of reference frequency division resource to determine whether the number of simulation frequency division resource is greater than the preset number of reference frequency division resource (S42);
   if the number of simulation frequency division resource is greater than the preset number of reference frequency division resource, determining the number of simulation frequency division resource as a real number of frequency division resource, and determining a real number of space division resource according to the real number of frequency division resource and the total number of bandwidth resources to be allocated (S43); and
   allocating the resources according to the real number of frequency division resource and the real number of space division resource (step S45).

4. The allocation method according to claim 1, wherein after the step (S42) of comparing the number of simulation frequency division resource with a preset number of reference frequency division resource to determine whether the number of simulation frequency division resource is greater than the preset number of reference frequency division resource, the method further comprises:
   if the number of simulation frequency division resource is less than or equal to the preset number of reference frequency division resource, determining the preset number of reference frequency division resource as a real number of frequency division resource, and determining a real number of space division resource according to the real number of frequency division resource and the total number of bandwidth resources to be allocated (step S44).

**5.** The allocation method according to anyone of claims 1-4, wherein
the step (S20) of obtaining the number of the space division terminals and the number of the frequency division terminals of the preset region in a current allocation period, respectively, and obtaining the history average spectral efficiency of the preset region comprises:

obtaining the number of the space division terminals and the number of the frequency division terminals of the preset region in a current allocation period, respectively, and obtaining an average spectral efficiency of the preset region in a previous allocation period.

**6.** An allocation terminal for frequency-domain bandwidth resources, the allocation terminal comprising a processor (1001), a memory (1005) and an allocation program stored in the memory (1005) and executable by the processor (1001), wherein when the allocation program is executed by the processor (1001), the following steps are implemented:

obtaining a total number of bandwidth resources to be allocated of a preset region according to frequency-domain bandwidth information of the preset region;
obtaining the number of space division terminals and the number of frequency division terminals of the preset region in a current allocation period, respectively, and obtaining a history average spectral efficiency of the preset region;
obtaining a simulation space division spectral efficiency and a simulation frequency division spectral efficiency according to the number of the space division terminals, the number of the frequency division terminals, and the history average spectral efficiency, and obtaining a simulation allocation proportion according to the simulation space division spectral efficiency and the simulation frequency division spectral efficiency; and
obtaining an allocation scheme according to the total number of bandwidth resources to be allocated, the simulation allocation proportion, and a preset allocation rule, and allocating the resources according to the allocation scheme.

**7.** The allocation terminal according to claim 6, wherein the history average spectral efficiency comprises a history space division average spectral efficiency and a history frequency division spectral efficiency, and
when the allocation program is executed by the processor (1001), the following steps are further implemented:
the step of obtaining the simulation space division spectral efficiency and the simulation frequency division spectral efficiency according to the number of the space division terminals, the number of the frequency division terminals, and the history average spectral efficiency, and obtaining the simulation allocation proportion according to the simulation space division spectral efficiency and the simulation frequency division spectral efficiency comprises:

obtaining the simulation space division spectral efficiency according to the number of the space division terminals and the history space division average spectral efficiency, and obtaining the simulation frequency division spectral efficiency according to the number of the frequency division terminals, and the history frequency division average spectral efficiency; and
obtaining the simulation allocation proportion according to the simulation space division spectral efficiency and the simulation frequency division spectral efficiency.

**8.** The allocation terminal according to claim 6, wherein the preset allocation rule comprises a preset number of reference frequency division resource, and
when the allocation program is executed by the processor (1001), the following steps are further implemented:

obtaining the number of simulation frequency division resource according to the total number of bandwidth resources to be allocated and the simulation allocation proportion;
comparing the number of simulation frequency division resource with the preset number of reference frequency division resource to determine whether the number of simulation frequency division resource is greater than the preset number of reference frequency division resource;
if the number of simulation frequency division resource is greater than the preset number of reference frequency division resource, determining the number of simulation frequency division resource as a real number of frequency division resource, and determining a real number of space division resource according to the real number of frequency division resource and the total number of bandwidth resources to be allocated;
if the number of simulation frequency division resource is less than or equal to the preset number of reference frequency division resource, determining the preset number of reference frequency division resource as the real number of frequency division resource, and determining the real number of space division resource according to the real number of frequency division resource and the total number of bandwidth resources to be allocated; and allocating the resources according to the real number of frequency division resource and the real number of space division resource.

9. The allocation terminal according to anyone of claims 6-8, wherein
when the allocation program is executed by the processor (1001), the following steps are further implemented:
obtaining the number of the space division terminals and the number of the frequency division terminals of the preset region in a current allocation period, respectively, and obtaining an average spectral efficiency of the preset region in a previous allocation period.

10. A computer-readable storage medium on which an allocation program is stored, wherein when the allocation program is executed by a processor, the steps of the allocation method according to anyone of claims 1-5 are implemented.

Fig. 1

| | |
|---|---|
| Obtain a total number of bandwidth resources to be allocated of a preset region according to frequency-domain bandwidth information of the preset region | S10 |
| Obtain the number of space division terminals and the number of frequency division terminals of the preset region in a current allocation period, respectively, and obtaini a history average spectral efficiency of the preset region | S20 |
| Obtain a simulation space division spectral efficiency and a simulation frequency division spectral efficiency according to the number of the space division terminals, the number of the frequency division terminals, and the history average spectral efficiency, and obtain a simulation allocation proportion according to the simulation space division spectral efficiency and the simulation frequency division spectral efficiency | S30 |
| Obtain an allocation scheme according to the total number of bandwidth resources to be allocated, the simulation allocation proportion, and a preset allocation rule, and allocate the resources according to the allocation scheme | S40 |

Fig. 2

```
┌─────────────────────────────────────────────────────────────┐
│ Obtain the simulation space division spectral efficiency      │   S31
│ according to the number of the space division terminals and   │
│ the history space division average spectral efficiency, and   │
│ obtain the simulation frequency division spectral efficiency  │
│ according to the number of the frequency division terminals,  │
│ and the history frequency division average spectral efficiency│
└─────────────────────────────────────────────────────────────┘
                              ↓
┌─────────────────────────────────────────────────────────────┐
│ Obtain the simulation allocation proportion according to the  │   S32
│ simulation space division spectral efficiency and the         │
│ simulation frequency division spectral efficiency             │
└─────────────────────────────────────────────────────────────┘
```

Fig. 3

```
┌─────────────────────────────────────────────────────────┐
│ Obtain the number of simulation frequency division       │  S41
│ resource according to the total number of bandwidth      │
│ resources to be allocated and the simulation allocation  │
│ proportion                                               │
└─────────────────────────────────────────────────────────┘
                              ↓
```

if the number of simulation frequency division resource is greater than the preset number of reference frequency division resource

Compare the number of simulation frequency division resource with the preset number of reference frequency division resource to determine whether the number of simulation frequency division resource is greater than the preset number of reference frequency division resource — S42

if the number of simulation frequency division resource is less than or equal to the preset number of reference frequency division resource

S43 — Determine the number of simulation frequency division resource as a real number of frequency division resource, and determine a real number of space division resource according to the real number of frequency division resource and the total number of bandwidth resources to be allocated

S44 — Determine the preset number of reference frequency division resource as a real number of frequency division resource, and determine a real number of space division resource according to the real number of frequency division resource and the total number of bandwidth resources to be allocated

S45 — Allocate the resources according to the real number of frequency division resource and the real number of space division resource

Fig.4

## INTERNATIONAL SEARCH REPORT

| International application No. |
|---|
| **PCT/CN2018/093166** |

### A. CLASSIFICATION OF SUBJECT MATTER

H04W 72/04(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, 3GPP: 空分, 频分, 终端, 设备, 数目, 数量, 个数, 比例, 优先, 分配, 调度, 获得, 带宽, 资源, 比值, 频谱效率, 速度, 速率, 无法, UE, spatial, division, frequency, Client, device, distribute, assign, resource, number, quantity, amount, ratio, proportion, speed, rate, FDMA, SDMA

### C. DOCUMENTS CONSIDERED TO BE RELEVANT

| Category* | Citation of document, with indication, where appropriate, of the relevant passages | Relevant to claim No. |
|---|---|---|
| A | CN 101035378 A (HUAWEI TECHNOLOGIES CO., LTD.) 12 September 2007 (2007-09-12) entire document | 1-10 |
| A | CN 103427972 A (BEIJING NORTHERN FIBERHOME TECHNOLOGIES CO., LTD.) 04 December 2013 (2013-12-04) entire document | 1-10 |
| A | CN 106559196 A (HUAWEI TECHNOLOGIES CO., LTD.) 05 April 2017 (2017-04-05) entire document | 1-10 |
| A | EP 2773160 A1 (HUAWEI TECH CO., LTD.) 03 September 2014 (2014-09-03) entire document | 1-10 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **15 August 2018** | **07 September 2018** |

| Name and mailing address of the ISA/CN | Authorized officer |
|---|---|
| **State Intellectual Property Office of the P. R. China No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/093166**

| Patent document cited in search report | | | Publication date (day/month/year) | Patent family member(s) | | | Publication date (day/month/year) |
|---|---|---|---|---|---|---|---|
| CN | 101035378 | A | 12 September 2007 | CN | 100527885 | C | 12 August 2009 |
| CN | 103427972 | A | 04 December 2013 | CN | 103427972 | B | 10 August 2016 |
| CN | 106559196 | A | 05 April 2017 | WO | 2017050212 | A1 | 30 March 2017 |
| | | | | EP | 3346653 | A1 | 11 July 2018 |
| EP | 2773160 | A1 | 03 September 2014 | WO | 2013083043 | A1 | 13 June 2013 |
| | | | | US | 2014269593 | A1 | 18 September 2014 |
| | | | | CN | 103139924 | A | 05 June 2013 |
| | | | | CN | 103139924 | B | 31 August 2016 |
| | | | | EP | 2773160 | A4 | 05 November 2014 |

Form PCT/ISA/210 (patent family annex) (January 2015)